# EUROPÄISCHE PATENTSCHRIFT

(11) **EP 2 559 537 B1**
(45) Veröffentlichungstag und Bekanntmachung des Hinweises auf die Patenterteilung: **29.07.2015**
(21) Anmeldenummer: 11008431.6
(22) Anmeldetag: 20.10.2011
(51) Int. Cl.: B29C 43/22, B29B 17/00

(54) **Verfahren und Vorrichtung zur Herstellung von Gegenständen aus Altkunststoffen und/oder Polymerneuware verschiedener oder gleicher chemischer Zusammensetzung und damit hergestellte Produkte**
Method and device for producing objects from waste plastics and/or new polymer goods of different or identical chemical composition and products produced accordingly
Procédé et dispositif de fabrication d'objets à partir de déchets plastiques et/ou de nouveaux produits en polymère de composition chimique différente ou similaire et produits ainsi fabriqués

(30) Priorität: 18.08.2011 EP 11006747
(43) Veröffentlichungstag der Anmeldung: 20.02.2013
(73) Patentinhaber: Neu, Werner, 89281 Altenstadt-Illereichen (DE)
(72) Erfinder: Neu, Werner, 89281 Altenstadt-Illereichen (DE)
(74) Vertreter: Müller-Boré & Partner Patentanwälte PartG mbB

(56) Entgegenhaltungen:
- EP-A1- 1 504 868
- DE-A1-102010 047 462
- GB-A- 1 369 204
- GB-A- 1 439 353
- GB-A- 1 442 659

## Beschreibung

Die Erfindung betrifft ein Verfahren und eine Vorrichtung zur Herstellung von Gegenständen aus zerkleinerten Kunststoffteilen wie Recyclat, Granulat, Mahlgut, Agglomerat und/oder deren Gemischen, bei dem man die Kunststoffteile auf einem nicht perforierten Träger aufschichtet, diese Schicht einer Wärmebehandung durch in die Schicht zwischen Lamellen eingeblasenes Heißgas unterzieht, die zumindest einen Teil der Kunststoffteile oder ihrer Oberflächen zum Erweichen und/oder Schmelzen und/oder Anschmelzen bringt, und daß man dann die Schicht der Kunststoffteile einem Form- und Preßvorgang unterzieht.

Aus der GB 1 369 204 ist ein solches Verfahren zur Herstellung von Gegenständen aus zerkleinerten Kunststoffteilen wie Recyclat, Granulat, Mahlgut, Agglomerat und/oder deren Gemischen im An- und Durchschmelzverfahren bekannt, bei dem man die Kunststoffteile auf einem nicht perforierten Träger aufschichtet, diese Schicht einer Wärmebehandung durch in die Schicht eingeblasenes Heißgas unterzieht, die zumindest einen Teil der Kunststoffteile oder ihrer Oberflächen zum Erweichen und/oder Schmelzen und/oder Anschmelzen bringt, und daß man dann die Schicht der Kunststoffteile einem Form- und Preßvorgang unterwirft. Die EP 1 504 868 offenbart ebenfalls ein solches Verfahren.

Dieses bekannte Verfahren will die Erfindung optimieren und dadurch effektiver machen, daß man den Heißgasstrom zu seiner Mitte zu durch die Stellung von Lamellen fokussiert, wobei eine Kernströmung mit erhöhter Heißgasgeschwindigkeit von zwei Strömungskanälen erhöhten statischen Druckes eingeschlossen wird.

Bei dieser Technik findet eine Strömungsumkehr im Schüttgut statt, bei der das Schüttgut sehr gleichmäßig von dem Heißgas durchdrungen wird und ein Heißgasquerstrom oberhalb der Schüttung weitgehend verhindert wird.

Die Vorrichtung zum Herstellen von Kunststoffteilen im An- oder durchschmelzverfahren nach diesem Verfahren besteht aus mindestens einem horizontal laufenden Transportband als Träger der anzuschmelzenden Kunststoffteilchen, das unter Heißgasdüsen, die mit Gasabzügen abwechseln, hindurchläuft, und einer nachgeschalteten Form- und/oder Preßvorrichtung, bei der das Transportband glatt und gasundurchlässig ist und über dem Transportband dicht oberhalb der Schüttung der zu verarbeitenden Kunststoffteilchen Leitlamellen in Form eines Leitlamellenbandes angeordnet sind, durch dessen Zwischenräume das Heißgas auf die Kunststoffteilchen gepreßt sowie vertikal gerichtet wird, und daß an zwischen den Heißgasdüsen gelegenen Stellen Gasabzugsvorrichtungen angeordnet sind, wobei das Leitlamellenband jeweils im Bereich der Heißgaszuführungsöffnungen verstellbare Heißgasführungsöffnungen zur Erzeugung einer hohen Strömungsgeschwindigkeit neben Zonen höheren statischen Druckes aufweist.

Dabei ist es Zweckmäßig, daß die Lamellen unter zumindest einer Heißgasdüse zur Erzielung der Fokussierung des Heißgasstromes unter einem kleinen Winkel auf eine gedachte Mittelebene unter der Heißgasdüse gerichtet sind.

Das Wesen der Erfindung ist nachstehend anhand der Zeichnung näher erläutert. Es zeigen:
- Fig. 1: eine Vorrichtung zum Anschmelzen und Sintern von Granulat;
- Fig.2: eine Vorrichtung zum Anschmelzen von zerkleinertem, teilweise geschäumtem Kunstoffschrott.
- Fig.3: eine Ansicht einer Lamelle
- Fig.4: einen Querschnitt durch Lamellen
- Fig.5: eine justierbare Lamellenanordnung an einem Heißgaskanalaustritt.

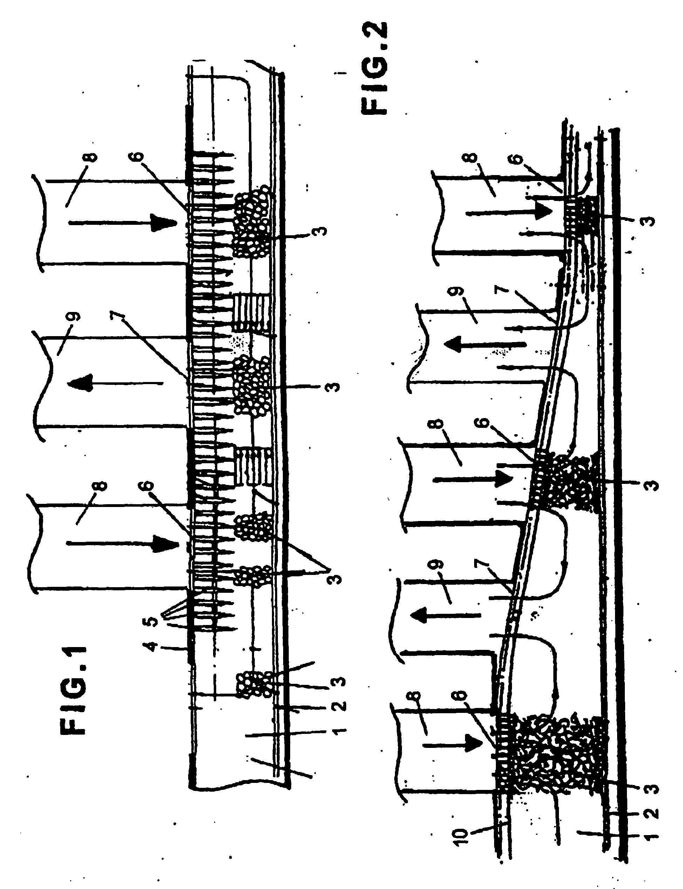

In einem Kanal 1der Fig.1 läuft ein Förderband 2, auf dem eine Schüttung 3 von Kunststoffteilchen in Form von zerkleinerten Kunststoffpartikeln und/oder Kunststoffgranülen in gleichmäßiger Höhe aufgeschüttet ist. Über dem Haufwerk 3 dieser auf dem Förderband 2 liegenden Kunststoffteilchen befindet sich eine Batterie von senkrecht von der Kanaldecke (Kanaloberseite) 4 herabhängenden, der Luftführung im Kanal 1 dienenden Lamellen 5. Die Kanaldecke 4 weist großflächige Heißgaszuführungsöffnungen 6 und zwischen diesen Heißgasaustrittsöffnungen 7 auf. Über den Heißgaszuführungsöffnungen 6 befinden sich Heißgaszuführungskanäle 8, in denen der von oben kommende Heißgasstrom in die für das Anschmelzen der Oberflächen der auf dem Förderband 1 liegenden Schüttung 3 von Kunststoffteilchen geeignete Form gebracht wird. Dieser Heißgasstrom dringt tief in die auf dem Förderband 2 liegende Schüttung 3 der auf dem Förderband 1 liegenden Kunststoffteilchen ein und wird, da das Förderband gasundurchlässig ist, nach beiden Seiten in Kanalrichtung abgelenkt, um dann durch die Gasaustrittsöffnungen 7 wieder aus dem Kanal 1 auszutreten und in den Austrittskanal 9 zu fließen. Die Lamellen 5 haben dabei die Aufgabe, die Bildung eines Heißgasstromes über der Schüttung der Kunststoffteilchen zu verhindern und die heiße Gasströmung nur durch die Schüttung der Kunststoffteilchen zu führen, so daß alle Kunststoffteilchen möglichst gleichmäßig an ihrer Oberfläche angeschmolzen werden.

Das aus den Gasaustrittsöffnungen 7 austretende, durch Wärmeabgabe in die Oberflächen der Granülen ein wenig abgekühlte Heißgas wird in einem nicht dargestellten Kreislauf durch Gaserhitzer erneut erhitzt und dann wieder den Heißgasdüsen 8 zugeführt.

Das zu verarbeitende Material kann bei seiner oberflächlichen Erhitzung starke Sinter- und Schrumpfeigenschaften aufweisen, wenn es *unter* Austritt von Gas aus *den* Zwischenräumen zwischen den Kunststoffteilchen zusammensintert. Dem wird in der erfindungsgemäßen Anlage dadurch Rechnung getragen, daß der mittlere Teil des Kanales 1 mit sich verengendem Querschnitt ausgeführt ist (Fig.2)

Das zu verarbeitende Material kann bei seiner oberflächlichen Erhitzung aber auch sich aufblähende Eigenschaften aufweisen, wenn ihm entsprechende Stoffe beigefügt sind. In diesem Falle wird der Kanal (Fig.2) mit erweitertem Querschnitt ausgeführt.

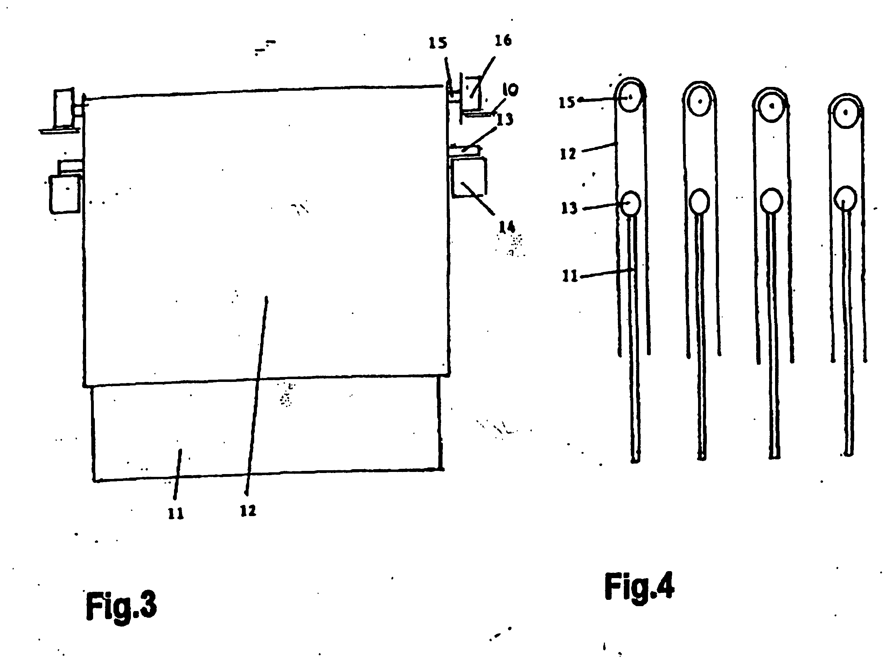

Die in Fig. 3 und 4 dargestellte Lamelle besteht aus dem Lamellenkörper 11, der in einer Kulisse 12 höhenverschiebbar gelagert ist. Der z.B. aus einer Blechscheibe bestehende Lamellenkörper 11 weist an seinem oberen Ende eine Lagerstange 13 auf, die auf einer Führungsschiene 14 aufliegt und durch diese in einer vorgegebenen Höhe gehalten wird. Die U-förmig gestaltete Kulisse 12 umgibt den oberen Teil des Lamellenkörpers 11, der in der Kulisse 12 verschiebbar ist. Die Kulisse 12 wird an ihrem oberen Ende von einer Stange 15 getragen, *die* an *der* umlaufenden oder örtlich fixierten Kette 16 angebracht ist. Diese bewirkt die Höhenverstellung der Kulisse 12 und eine davon unabhängige Höhenverstellung des Lamellenkörpers 11.

Die Lamellen 5 werden von Führungsschienen 10 getragen, die über Sensoren höhenverstellbar sind. Auf diese Weise kann man die Lamellenträgerkonstruktion jeder beliebigen Oberflächenform des auf dem Förderband 2 lagernden Schmelzgutes ohne erheblichen Aufwand anpassen und darüber hinaus mit einer Winkelstellung a und β der Lamellen 1 zur Optimierung des Strömungsverlaufes in der Schüttung versehen.

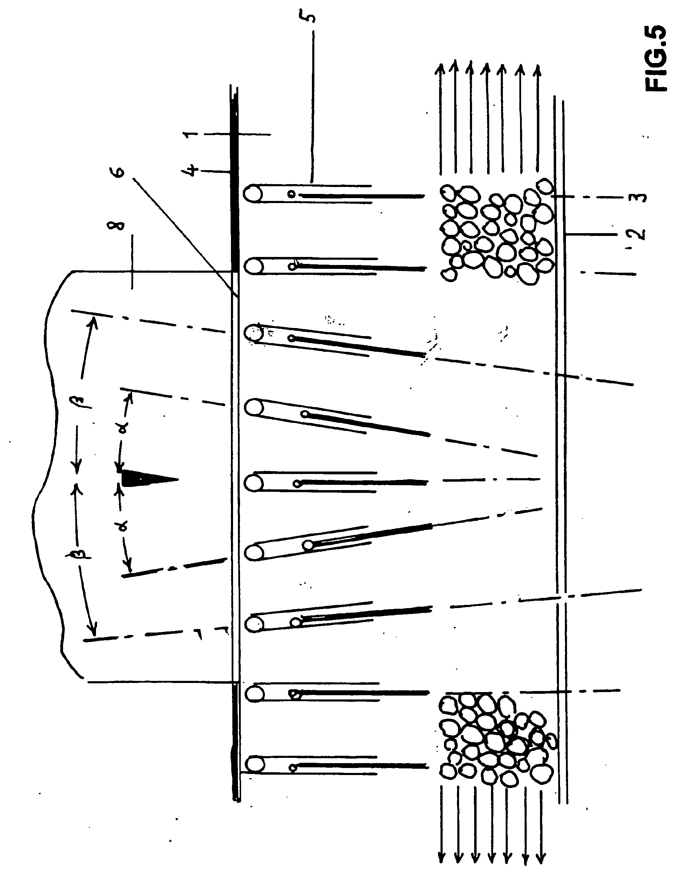

Wie Fig. 5 zeigt, kann der Heißluftstrom zu seiner Mitte fokussiert werden, so daß durch die Winkelstellung a Geschwindigkeit der Kernströmung zwischen den Lamellen des Heißgases erhöht (Düsenprinzip) wird, während die äußere Strömung unter Druckerhöhung oberhalb der Schüttung durch die Öffnungswinkel ß verlangsamt wird (Diffusorprinzip). Hierdurch wird eine sehr gleichmäßige horizontale Strömungsverteilung in der gesamten Schütthöhe der Schüttung erreicht und dadurch eine höhenunabhängige Wärmeverteilung im Haufwerk erreicht.

Die Erfindung ist nicht nur beim Recycling von Kunststoffen von Bedeutung, sie spielt wegen ihres geringen Energieverbrauches z.B. im Vergleich zum herkömmlichen Wärmeleitungsverfahren in Doppelbandpressen auch bei der Verarbeitung von Neukunststoff zu Formprodukten eine nicht zu unterschätzende Rolle.

### Liste der Bezugszeichen

- 1: Kanal
- 2: Förderbandes
- 3: Granülen
- 4: Kanaldecke (Kanaloberteil)
- 5: Lamelle
- 6: Heißgaszuführungsöffnung
- 7: Gasabführungsöffnung
- 8: Heißgasdüse
- 9: Gasabführungskanal
- 10: Schiene für die Führung der Lamellen
- 11: Lamellenkörper
- 12: Kulisse
- 13: Lagerstange für die Höheneinstellung der Lamelle
- 14: Schiene für Lagerstangen der Lamellen
- 15: Lagerstange für die Höheneinstellung der Kulisse
- 16: Kette

## Patentansprüche

1. Verfahren zur Herstellung von Gegenständen aus zerkleinerten Kunststoffteilen wie Recyclat, Granulat, Mahlgut, Agglomerat und/oder deren Gemischen,
bei dem man die Kunststoffteile auf einem nicht perforierten Träger aufschichtet, diese Schicht einer Wärmebehandung durch in die Schicht eingeblasenes Heißgas unterzieht, die zumindest einen Teil der Kunststoffteile oder ihrer Oberflächen zum Erweichen und/oder Schmelzen und/oder Anschmelzen bringt, und daß man dann die Schicht der Kunststoffteile einem Form- und Preßvorgang unterwirft,
**dadurch gekennzeichnet, dass** das Heißgas zwischen Lamellen eingeblasen wird, **daß** man den Heißgasstrom zu seiner Mitte zu durch die Stellung
von Lamellen fokussiert, wobei eine Kernströmung mit erhöhter Heißgasgeschwindigkeit eingeschlossen wird von zwei Strömungskanälen erhöhten statischen Druckes.

2. Vorrichtung zum Herstellen von Kunststoffteilen im An- oder durchschmelzverfahren,
bestehend aus mindestens einem horizontal laufenden Transportband (2) als Träger der anzuschmelzenden Kunststoffteilchen (3), das unter Heißgasdüsen (8), die mit Gasabzügen (9) abwechseln, hindurchläuft, und einer nachgeschalteten Form- und/oder Preßvorrichtung,
bei de das Transportband (2) glatt und gasundurchlässig ist und wobei an zwischen den Heißgasdüsen (8) gelegenen Stellen Gasabzugsvorrichtungen (9) angeordnet sind
**dadurch gekennzeichnet, dass** über dem Transportband dicht oberhalb der Schüttung der zu verarbeitenden Kunststoffteilche (3) Leitlamelle (5) in Form eines Leitlamellenbandes angeordnet sind, durch dessen Zwischenräume das Heißgas auf die Kunststoffteilchen gepreßt sowie vertical gerichtet wird, und
daß das Leitlamellenband (5) jeweils im Bereich der Heißgaszuführungsöffnungen verstellbare Heißgasführungsöffnungen (6) zur Erzeugung einer hohen Strömungsgeschwindigkeit neben Zonen höheren statischen Druckes aufweist.

3. Vorrichtung zum Herstellen von Kunststoffteilen im An- oder durchschmelzverfahren,
bestehend aus mindestens einem horizontal laufenden Transportband (2) als Träger der anzuschmelzenden Kunststoffteilchen (3), das unter Heißgasdüsen (8), die mit Gasabzügen (9) abwechseln, hindurchläuft, und einer nachgeschalteten Form- und/oder Preßvorrichtung,
bei der das Transportband (2) gtatt und gasundurchlässig ist
und wobei an zwischen den Heißgasdüsen (8) gelegenen Stellen Gasabzugsvorrichtungen (9) angeordnet sind,
**dadurch gekennzeichnet, dass** über dem Transportband dicht oberhalb der Schüttung der zu verarbeitenden Kunststoffteilchen (3) Leitlamellen (5) in Form eines Leitlamellenbandes angeordnet sind, durch dessen Zwischenräume das Heißgas auf die Kunststoffteilchen gepreßt sowie vertikal gerichtet wird, und
daß die Lamellen unter zumindest einer Heißgasdüse zur Erzielung der Fokussierung des Heißgasstromes unter einem kleinen Winkel auf eine gedachte Mittelebene unter der Heißgasdüse gerichtet sind.

## Claims

1. A method for producing items from crushed plastic parts, such as regrind, granulate, ground material, agglomerate and/or mixtures thereof,
in which the plastic parts are stacked on a non-perforated carrier, this layer is subjected to a heat treatment by hot gas blown into the layer, which causes at least part of the plastic parts or surfaces thereof to soften and/or melt and/or partly melt, and the layer of the plastic parts is subjected to a moulding and pressing process,
**characterized in that** the hot gas is blown into between lamellae and that the hot gas flow is focused toward its centre by the position of lamellae, wherein a core flow with increased hot gas velocity is enclosed by two flow channels of increased static pressure.

2. A device for producing plastic parts in a partial-melting or through-melting process,
composed of at least one horizontally extending conveyor belt (2) as a carrier of the plastic parts (3) to be partly melted, said conveyor belt passing below hot gas nozzles (8) that alternate with gas outlets (9), and of a downstream moulding and/or pressing device,
in which the conveyor belt (2) is smooth and impermeable to gas, and wherein gas outlet devices (9) are arranged at locations between the hot gas nozzles (8),
**characterized in that** above the conveyor belt just above the fill of the plastic parts (3) to be processed, guide lamellae (5) in the form of a guide lamella band are arranged, through the gaps of which the hot gas is pressed and vertically directed onto the plastic parts, and that the guide lamella band (5), in the region of the hot gas feed openings, has adjustable hot gas guide openings (6) for creating a higher flow velocity next to zones of a higher static pressure.

3. A device for producing plastic parts in a partial-melting or through-melting process,
composed of at least one horizontally extending conveyor belt (2) as a carrier of the plastic parts (3) to be partly melted, said conveyor belt passing below hot gas nozzles (8) that alternate with gas outlets (9), and of a downstream moulding and/or pressing device,
in which the conveyor belt (2) is smooth and impermeable to gas, and wherein gas outlet devices (9) are arranged at locations between the hot gas nozzles (8),
**characterized in that** above the conveyor belt just above the fill of the plastic parts (3) to be processed, guide lamellae (5) in the form of a guide lamella band are arranged, through the gaps of which the hot gas is pressed and vertically directed onto the plastic parts, and that the lamellae below at least one hot gas nozzle, for achieving focusing of the hot gas flow, are directed onto an imaginary centre plane below the hot gas nozzle at a small angle.

## Revendications

1. Procédé pour la fabrication d'articles à partir de pièces en matière plastique broyées tels qu'un recyclat, un granulat, un matériau broyé, un agglomérat et/ou leurs mélanges,
dans lequel on applique les pièces en matière plastique sur un support non perforé, cette couche est soumise à un traitement thermique par du gaz chaud insufflé dans la couche, qui assouplit, fait fondre et/ou met en fusion au moins une partie des pièces en matière plastique ou de leurs surfaces, et on soumet ensuite la couche de pièces en matière plastique à un processus de moulage et de compression,
**caractérisé en ce que**
le gaz chaud est insufflé entre des lamelles et
l'on focalise le courant de gaz chaud vers son milieu, par la position de lamelles, un courant central présentant des vitesses de gaz chaud accrues étant intégré par deux canaux d'écoulement de pression statique accrue.

2. Dispositif de fabrication de pièces en matière plastique dans le procédé de mise en fusion ou de fusion complète,
consistant en au moins une bande de transport (2) avançant horizontalement en tant que support des particules de matière plastique (3) à mettre en fusion, qui avance sous des buses de gaz chaud (8) qui alternent avec des évacuations de gaz (9), et en un dispositif de moulage et/ou de compression en aval,
dans lequel la bande de transport (2) est lisse et imperméable aux gaz, et des dispositifs d'évacuation de gaz (9) étant disposés sur des sites placés entre les buses de gaz chaud (8), **caractérisé en ce que**
sur la bande de transport, sont disposées de façon étanche, au-dessus du chargement de particules de matière plastique (3) à transformer, des lamelles conductrices (5) sous la forme d'une bande de lamelles conductrices au travers des espaces intermédiaires de laquelle le gaz chaud est comprimé et orienté verticalement sur les particules de matière plastique et
la bande de lamelles conductrices (5) présente respectivement, dans la zone des ouvertures d'acheminement de gaz, des ouvertures de conduite de gaz (6) chaud ajustables afin de générer une vitesse d'écoulement élevée à côté de zones de pression statique supérieure.

3. Dispositif de fabrication de pièces en matière plastique dans le procédé de mise en fusion ou de fusion complète,
consistant en au moins une bande de transport (2) avançant horizontalement en tant que support des particules de matière plastique (3) à mettre en fusion, qui avance sous des buses de gaz chaud (8) qui alternent avec des évacuations de gaz (9), et en un dispositif de moulage et/ou de compression en aval,
dans lequel la bande de transport (2) est lisse et imperméable aux gaz et des dispositifs d'évacuation de gaz (9) étant disposés sur des sites placés entre les buses de gaz chaud (8),
**caractérisé en ce que**
sur la bande de transport, sont disposées de façon étanche, au-dessus du chargement de particules de matière plastique (3) à transformer, des lamelles conductrices (5) sous la forme d'une bande de lamelles conductrices au travers des espaces intermédiaires de laquelle le gaz chaud est comprimé et orienté verticalement sur les particules de matière plastique et (BIS)
les lamelles sont orientées sous au moins une buse de gaz chaud de façon à obtenir la focalisation du courant de gaz chaud selon un petit angle sur un plan médian imaginaire sous la buse de gaz chaud.
